# EUROPEAN PATENT SPECIFICATION

(11) **EP 2 975 161 B1**
(45) Date of publication and mention of the grant of the patent: **01.01.2020**
(21) Application number: 15382364.6
(22) Date of filing: 14.07.2015
(51) Int. Cl.: C23C 2/06, C09D 5/08, C23C 28/00

(54) **COATED WIRE, METHOD FOR OBTAINING SAME AND MESH COMPRISING SAME**
BESCHICHTETER DRAHT, VERFAHREN ZU DESSEN HERSTELLUNG UND GITTER DAMIT
FIL ENROBÉ, SON PROCÉDÉ D'OBTENTION ET TREILLIS COMPRENANT CELUI-CI

(30) Priority: 18.07.2014 ES 201431086
(43) Date of publication of application: 20.01.2016
(73) Proprietor: Moreda-Riviere Trefilerias, S.A., 33211 Gijon (Asturias) (ES)
(72) Inventor: REINA PARIENTE, Juan, Carlos, 33211 GIJÓN (Asturias) (ES)
(74) Representative: Carpintero Lopez, Francisco

(56) References cited:
- CN-A- 101 565 827
- JP-A- H0 874 063
- KR-B1- 100 790 269
- US-A1- 2011 070 429
- Unknown: "Cobalt in Chemicals", Cobalt Facts - Chemicals, 1 January 2006 (2006-01-01), pages 29-40, XP055378835, Retrieved from the Internet: URL:http://www.thecdi.com/cdi/images/docum ents/facts/COBALT_FACTS-Chemicals.pdf [retrieved on 2017-06-06]

## Description

### Object of the Invention

The present invention relates to a coated wire and to the method for obtaining same. Said wire is particularly useful for being used outdoors.

The present invention also relates to meshes for fencings comprising the coated wire of the invention.

### Background of the Invention

Wires and specifically wires that will be used outdoors, for example, for fencing in farmlands or livestock, must have good anti-corrosion properties and therefore be durable.

Today the passivation layers of these wires are usually coated with Cr⁶⁺, an element that is very harmful for the environment.

For example, European patent with publication number EP0553164 describes a composition including hexavalent chromium producing a protective layer on the surface of zinc-coated steel. Likewise, European patent with publication number EP0436408 describes an anti-corrosion coating based on Cr⁶⁺ and not requiring any additional protective layer.

The coated wire of the invention does not contain Cr⁶⁺ and is therefore a coating that is less damaging for the environment, but at the same time achieving very good anti-corrosion levels, which allows using this coating in wires exposed to extreme weather conditions.

To that end and based on what is known in the state of the art, it can be inferred that developing a coating that is free of Cr⁶⁺ but with suitable anti-corrosion characteristics is necessary and of great interest. US 2011/0070429 discloses such an anti-corrosion coating free of Cr⁶⁺_{.}

### Description of the Invention

The inventors have developed a coated wire that is free of hexavalent chromium, with a very good corrosion resistance, high lubricity, fingerprint resistant, and with a finishing that can be of color. The wire of the invention has on the steel core a galvanization layer in turn covered by a protective composition.

A first aspect of the invention therefore relates to a coated wire comprising, in a concentric manner and from inside to outside, the following layers:
a steel core;
a zinc galvanization layer;
a protective layer, with a thickness comprised between 1 µm and 4 µm, of a composition according to claim 1.

One of the advantages of the protective layer is the complete absence of Cr⁶⁺. The protective layer is durable and has a sufficiently good corrosion resistance despite the how thin the layer is.

The method for obtaining the wire of the invention is simple and minimum thicknesses of the protective layer which is deposited on the galvanization layer can be obtained, but with excellent anti-corrosion characteristics.

A second aspect of the invention therefore relates to the method for obtaining the wire of the invention comprising the steps of:
a) galvanizing a steel core with zinc;
b) introducing the galvanized object of step a) in a bath comprising a composition according to claim 3 at a temperature comprised between 20°C and 40°C;
c) heating the object obtained in step c) in a drying oven at a temperature comprised between 250°C - 400°C.

These wires are essentially intended for agricultural uses which are especially exposed to corrosive agents such as fertilizers, fungicides, high humidity or the combination of some of these elements. To that end, corrosion resistance is particularly interesting in order to prolong the life thereof to the maximum. The wires of the invention are particularly used in greenhouses, trellis-type vineyards and espalier-type vineyards.

For example, the wire of the invention is used for making knotted meshes and simple twist meshes for agricultural fencings and highway fencings, barbed wire for farmland closures and for reinforcing industrial or military area security .

The coated wire has a low coefficient of friction, which favors the subsequent transformation of the wire into meshes by forming. This lubricated surface is very helpful in mechanical deformation operations during the process of application in the winding and friction with pulleys and in subsequent operations during mesh weaving.

A third aspect of the invention therefore relates to meshes for fencings comprising the coated wire of the invention.

### Description of the Drawings

Figure 1 shows the time of onset of white rust and red rust of the samples of the comparative example, Example 2, in a galvanized wire (1) and in a wire of the invention (2).
Figure 2 shows the rate of onset of Zn corrosion of the samples of the comparative example, Example 2, in a galvanized wire (1) and in the wire of the invention (2). The onset of zinc corrosion is represented in % with respect to exposure time in hours (h) in a salt spray chamber.
Figure 3 shows the loss of Zn weight in g/m² of the samples of the comparative example, Example 2, in a galvanized wire (1) and in the wire of the invention (2), with respect to the exposure time (h) in a salt spray chamber.

### Detailed Description of the Invention

As mentioned in preceding paragraphs, the first aspect of the invention relates to a coated wire, where it comprises, in a concentric manner and from inside to outside, the following layers:
a steel core;
a zinc galvanization layer;
a protective layer, with a thickness comprised between 1 µm and 4 µm, of a composition according to claim 1.

In a particular embodiment of the coated wire defined in the first aspect of the invention, the galvanization layer comprises, in a concentric manner and from inside to outside:
a zinc iron alloy layer comprising between 21% and 28% iron, with a thickness comprised between 2 µm and 6 µm;
a zinc iron alloy layer comprising between 6% and 11% iron, with a thickness comprised between 20 µm and 40 µm;
a zinc iron alloy layer comprising between 4% and 6% iron, with a thickness comprised between 15 µm and 30 µm;
a zinc layer, with a thickness comprised between 25 µm and 40 µm.

The protective layer protecting the galvanization layer has crosslinking agents in an acid medium. The crosslinking agents are selected from: titanium salts, zirconium salts and cobalt hydroxide or mixtures thereof. More preferably, they are selected from titanium salts and zirconium salts. Likewise, in a preferred embodiment the acid medium is selected from: orthophosphoric acid or sulfuric acid. According to the invention, crosslinking agents and acid medium are hexafluorotitanic acid, cobalt hydroxide and orthophosphoric acid.

The protective layer comprises 0.1% to 12% chromium trichloride, 0.5% to 10% hexafluorotitanic acid, 0.1 to 2.5% orthophosphoric acid, 0.7% to 15% cobalt hydroxide, 65% to 85% acrylic polymer and 4% to 6% pigment.

As mentioned above, the second aspect of the invention relates to a coating method for coating steel objects.

The galvanization step consists of applying a zinc coat to a piece of steel in order to protect it from corrosion. The ways of applying the zinc coats are mainly hot-dip galvanization, electrolytic deposition, zinc metallization and paints rich in zinc. In a preferred embodiment, the galvanization is hot-dip galvanization. This hot-dip galvanization is more efficient and cost effective. The zinc is coated on steel during hot-dip galvanization by means of immersion in a molten zinc bath.

The hot-dip galvanization step is preferably performed in a zinc bath at a temperature comprised between 350°C and 500°C and in that after step a) the temperature of the object galvanized in step a) is reduced to a temperature comprised between 70°C and 120°C, before introducing the galvanized object in the bath of step b). A chemical reaction between the iron of the steel and the zinc occurs at this temperature giving rise to the formation of zinc-iron alloys on the surface of the steel. The concentration of the composition in the bath of step b) of the method of the invention must preferably be 4% to 6%.

Finally, the third aspect of the invention, the mesh for fencing, comprises the coated wire in any of the particular embodiments defined above.

### Examples

### Example 1. Method for obtaining the wire of the invention

The protective layer of the wire of the invention was continuously applied in the same installation for galvanizing wire.

After draining the zinc and before winding, the galvanized wire was cooled with cooling jets before entering a bath with the composition of the protective layer. The composition was 5% Cr³⁺ trichloride, 3% hexafluorotitanic acid, 2% orthophosphoric acid, 5% cobalt hydroxide, 80% acrylic polymer and 5% green pigment.

The wire is at 20°C before entering the bath; the concentration of the protective composition in the bath is 5%.

After the bath, the wires passed through draining rollers and a 725°C drying oven.

The installation must have a cooling system for cooling the bath to prevent exceeding 35°C and to prevent the bath from decomposing.

### Example 2. Comparative example between a galvanized wire and a wire of the invention

The present comparative example compares the corrosion resistance of a wire of the invention (2) and a wire without the final protective layer (1) present in the wire of the invention, only with the galvanization layer, also present in the wire of the invention.

The comparative example shows greater environmental corrosion resistance by means of comparative accelerated corrosion tests in a Neutra salt spray chamber according to the ISO-7253 standard.

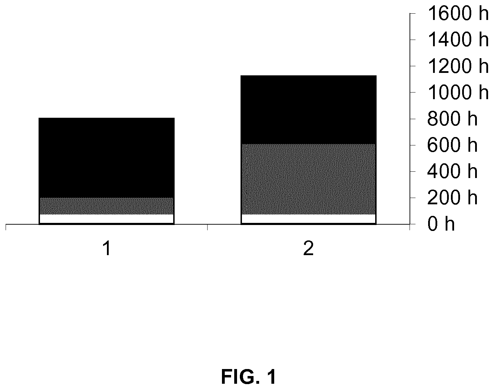

Values are recorded and the time at which white rust and red rust start and develop is represented in Figure 1. White rust represents oxidation of the layer in contact with the air, the outermost layer, and red rust represents oxidation of the metal core.

The white rust and red rust results depicted in Figure 1 show that both white rust and red rust develop later in the wires of the invention.

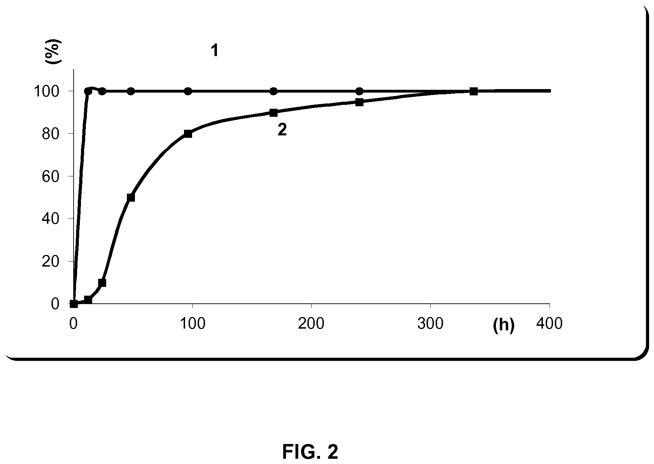

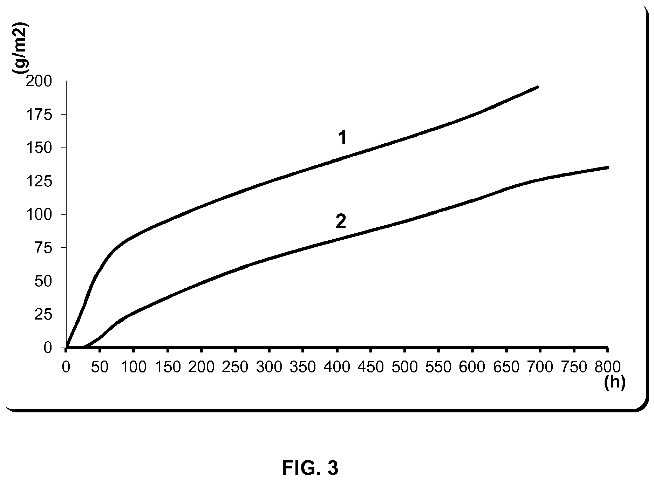

Figure 2 shows that the rate of onset of zinc corrosion on the samples is slower in the wire of the invention (2). Figure 3 shows that the loss of zinc weight of the wire is less in the wire of the invention (2). The advantages of the coating are demonstrated.

## Claims

1. Coated wire comprising, in a concentric manner and from inside to outside, the following layers:
a steel core;
a zinc galvanization layer;
a protective layer, with a thickness comprised between 1 µm and 4 µm, of a composition comprising:
between 0.1% and 12% chromium trichloride, between 0.5% and 10% hexafluorotitanic acid, between 0.1 and 2.5% orthophosphoric acid, between 0.7% and 15% cobalt hydroxide, between 65% and 85% acrylic polymer and between 4% and 6% pigment.

2. Coated wire according to claim 1, where the galvanization layer comprises, in a concentric manner and from inside to outside, the following layers:
a zinc iron alloy layer comprising between 21% and 28% iron, with a thickness comprised between 2 µm and 6 µm;
a zinc iron alloy layer comprising between 6% and 11% iron, with a thickness comprised between 20 µm and 40 µm;
a zinc iron alloy layer comprising between 4% and 6% iron, with a thickness comprised between 15 µm and 30 µm;
a zinc layer, with a thickness comprised between 25 µm and 40 µm.

3. Coating method for coating the coated wires of claims 1-2, **characterized in that** it comprises the steps of:
a) galvanizing a steel core with zinc;
b) introducing the galvanized object of step a) in a bath comprising a composition which in turn comprises: an acrylic polymer, a pigment, the chromium trichloride and the hexafluorotitanic acid and the cobalt hydroxide in orthophosphoric acid, at a temperature comprised between 20°C and 40°C;
c) heating the object obtained in step c) in a drying oven at a temperature comprised between 250°C and 400°C.

4. Coating method according to claim 3, **characterized in that** step a) is performed at a temperature between 350°C and 500°C, and **in that** after step a) the temperature of the object galvanized in step a) is reduced to a temperature comprised between 70°C and 120°C before introducing the galvanized object in the bath of step b).

5. Mesh for fencing comprising the coated wire defined in any of claims 1-2.

## Patentansprüche

1. Beschichteter Draht, der in konzentrischer Weise von innen nach außen folgende Schichten aufweist:
einen Stahlkern;
eine Zinkgalvanisierungsschicht;
eine Schutzschicht mit einer Dicke zwischen 1 µm und 4 µm aus einer Zusammensetzung, die Folgendes aufweist:
zwischen 0,1% und 12% Chromtrichlorid, zwischen 0,5% und 10% Hexafluorotitansäure, zwischen 0,1% und 2,5%, Ortophosphorsäure, zwischen 0,7% und 15% Kobalthydroxid, zwischen 65% und 85% Acrylpolymer und zwischen 4% und 6% Pigment.

2. Beschichteter Draht gemäß Anspruch 1, bei dem die Galvanisierungsschicht in konzentrischer Weise von innen nach außen folgende Schichten aufweist:
eine Zink-Eisen-Legierungsschicht mit zwischen 21% und 28% Eisen mit einer Dicke zwischen 2 µm und 6 µm;
eine Zink-Eisen-Legierungsschicht mit zwischen 6% und 11% Eisen mit einer Dicke zwischen 20 µm und 40 µm;
eine Zink-Eisen-Legierungsschicht mit zwischen 4% und 6% Eisen mit einer Dicke zwischen 15 µm und 30 µm;
eine Zinkschicht mit einer Dicke zwischen 25 µm und 40 µm.

3. Beschichtungsverfahren zum Beschichten der beschichteten Drähte gemäß Anspruch 1 bis 2, das **dadurch gekennzeichnet ist, dass** es folgende Schritte aufweist:
a) Galvanisieren eines Stahlkerns mit Zink;
b) Einführen des galvanisierten Objekts aus Schritt a) in ein Bad mit einer Zusammensetzung, die wiederum Folgendes aufweist: ein Acrylpolymer, ein Pigment, das Chromtrichlorid und die Hexafluorotitansäure und das Kobalthydroxid in Ortophosphorsäure bei einer Temperatur zwischen 20°C und 40°C;
c) Erwärmen des bei Schritt c) erhaltenen Objekts in einem Trockenofen bei einer Temperatur zwischen 250°C und 400°C.

4. Beschichtungsverfahren gemäß Anspruch 3, das **dadurch gekennzeichnet ist, dass** Schritt a) bei einer Temperatur zwischen 350°C und 500°C durchgeführt wird, und dadurch, dass nach Schritt a) die Temperatur des bei Schritt a) galvanisierten Objekts vor einem Einführen des galvanisierten Objekts in das Bad bei Schritt b) auf eine Temperatur zwischen 70°C und 120°C reduziert wird.

5. Netz zum Einzäunen mit dem beschichteten Draht gemäß einem der Ansprüche 1-2.

## Revendications

1. Fil enrobé comprenant, de façon concentrique et depuis l'intérieur vers l'extérieur, les couches suivantes :
un noyau en acier,
une couche de galvanisation au zinc,
une couche protectrice avec une épaisseur comprise entre 1 µm et 4 µm d'une composition comprenant :
entre 0,1% et 12% de trichlorure de chrome, entre 0,5% et 10% d'acide hexafluorotitanique, entre 0,1 et 2,5% d'acide orthophosphorique, entre 0,7% et 15% d'hydroxyde de cobalt, entre 65% et 85% de polymère acrylique et entre 4% et 6% de pigment.

2. Fil enrobé suivant la revendication 1, la couche de galvanisation comprenant, de façon concentrique et depuis l'intérieur vers l'extérieur, les couches suivantes :
une couche en alliage zinc-fer comprenant entre 21% et 28% de fer, d'une épaisseur comprise entre 2µm et 6µm,
une couche en alliage zinc-fer comprenant entre 6% et 11 % de fer, d'une épaisseur comprise entre 20µm et 40µm,
une couche en alliage zinc-fer comprenant entre 4% et 6% de fer, d'une épaisseur comprise entre 15µm et 30µm,
une couche de zinc d'une épaisseur comprise entre 25µm et 40µm.

3. Procédé d'enrobage pour enrober les fils enrobés suivant les revendications 1 à 2, **caractérisé en ce que** le procédé comprend les étapes consistant à :
a) galvaniser au zinc un noyau en acier,
b) introduire l'objet galvanisé à l'étape a) dans un bain comprenant une composition qui comprend à son tour : un polymère acrylique, un pigment, le trichlorure de chrome et l'acide hexafluorotitanique et l'hydroxyde de cobalt dans de l'acide orthophosphorique, à une température comprise entre 20°C et 40°C,
c) chauffer l'objet obtenu à l'étape c) dans un four de séchage à une température comprise entre 250°C et 400°C.

4. Procédé d'enrobage suivant la revendication 3, **caractérisé en ce que** l'étape a) est exécutée à une température entre 350°C et 500°C et **en ce qu'**après l'étape a), la température de l'objet galvanisé à l'étape a) est réduite à une température comprise entre 70°C et 120°C avant d'introduire l'objet galvanisé dans le bain de l'étape b).

5. Treillis pour clôture comprenant le fil enrobé défini par une des revendications 1 à 2.
